# DEMANDE DE BREVET EUROPEEN

(11) **EP 4 488 528 A1**
(43) Date de publication de la demande: **08.01.2025**
(21) Numéro de dépôt: 24184791.2
(22) Date de dépôt: 26.06.2024
(51) Int. Cl.: F15B 15/14, B25J 15/06, B65G 47/91, B66C 1/02, B33Y 80/00, B22F 10/28

(54) **DISPOSITIF DE VERIN PREHENSEUR VENTOUSE ET ENSEMBLE RETOURNEUR**

(30) Priorité: 03.07.2023 FR 2307056
(71) Demandeur: Velec Systems, 59150 Wattrelos (FR)
(72) Inventeur: PIERRON, Thomas, 59150 WATTRELOS (FR); LALET, Ludovic, 59150 WATTRELOS (FR)
(74) Mandataire: Plasseraud IP

(57) **Abrégé**

Dispositif préhenseur ventouse (1) comportant :
- au moins un vérin pneumatique (3) comportant un corps de cylindre (30), un piston (31) coulissant dans une chambre interne (33) du corps de cylindre (30), une tige (32) solidaire du piston (31), l'ensemble piston (31)-tige (32) étant configuré pour se rétracter et se déployer,
- une ventouse pneumatique (34) solidaire de la tige (32), un circuit de mise sous vide,

le circuit de mise sous vide comportant :
- la tige (32) qui est tubulaire, et communiquant avec la ventouse pneumatique (34),
- un conduit interne (35), en liaison étanche avec la tige via des joints coulissants (36), formant une chambre de mise sous vide (37),

et dans lequel le piston (31) est annulaire et balaye une chambre de mise en pression (33A, 33B) annulaire du corps de cylindre (30) connectée à au moins un port d'air comprimé (38A, 38B).

## Description

La présente divulgation est relative à un dispositif préhenseur ventouse, ainsi qu'à un ensemble retourneur équipé d'un tel dispositif.

### Domaine technique

La présente divulgation relève du domaine des équipements automatisés de production industrielle. Plus précisément, on s'intéresse ici aux dispositifs et vérins de préhension par ventouse compacts.

### Technique antérieure

Les vérins standards comprennent généralement un corps creux, étanche, comportant une chambre interne dans laquelle un piston coulisse. Le piston est classiquement pourvu d'une tige faisant saillie du corps de vérin. De l'air, dans le cas de vérins pneumatiques (ou de l'huile, dans le cas de vérins hydrauliques), circule dans la chambre et actionne le piston pour déployer/rétracter la tige par rapport au corps de vérin. Les vérins pneumatiques de ce type sont largement connus et utilisés dans divers domaines d'application, principalement industrielle, avec notamment des dispositifs de vérins préhenseurs et de levage équipés de ventouse.

À cet effet, le vérin est connecté à des canaux et ports pneumatiques, servant à acheminer l'air/le fluide au sein de la chambre du piston, pour pousser le piston dans un sens ou dans l'autre de la chambre. Un système additionnel de ventouse, juxtaposé comportant une ou plusieurs ventouses, est connecté à une source de vide, et est fixé à la tige du vérin. L'ensemble vérin pneumatique et système de ventouse permet de contrôler la descente ou la montée de la ventouse, par déploiement ou rétractation du vérin et de saisir un objet par effet de succion de la ventouse pneumatique.

Selon les constatations des inventeurs, l'encombrement axial d'un tel ensemble n'est pas optimisé. En outre, les canaux d'air et la source de vide de ces dispositifs sont montés indépendamment et à l'extérieur du corps de vérin. Ces éléments externes ne sont pas optimisés pour réduire l'encombrement ni le poids des dispositifs et peuvent être dégradés plus rapidement et plus facilement qu'un système intégré.

De plus, dans un environnement de production industrielle, la multiplication d'éléments externes, tels que le passage de câbles ou des pièces saillantes, peut être gênante, voire dangereuse pour les opérateurs et techniciens. Il est donc particulièrement intéressant de chercher à réduire l'encombrement et les dimensions des équipements robotiques.

En outre, les dispositifs connus ne sont classiquement démontables que partiellement, une fois assemblés, et les espaces internes sont alors difficilement accessibles.

Ces dispositifs présentent également généralement des cavités sur leurs parois externes, favorisant l'accumulation de dépôts. Notamment, dans la production agroalimentaire, des salissures se logent dans ces espaces et il est difficile de les nettoyer entièrement.

### Résumé

La présente divulgation vient améliorer la situation.

Il est proposé un dispositif préhenseur ventouse comportant :
- au moins un vérin pneumatique comportant un corps de cylindre, un piston monté coulissant dans une chambre interne du corps de cylindre, et une tige solidaire du piston s'étendant depuis une extrémité proximale depuis la chambre interne jusqu'à l'extérieur du corps de cylindre, au travers d'une ouverture dans le corps de cylindre,
- un système de ventouse pneumatique comportant une ventouse pneumatique solidaire de l'extrémité distale de la tige, et un circuit de mise sous vide de la ventouse pneumatique et dans lequel l'ensemble piston et tige est configuré pour sélectivement se rétracter dans une première position dans le corps de cylindre, et pour se déployer dans une deuxième position en sortie du corps de cylindre

et dans lequel le circuit de mise sous vide de la ventouse pneumatique comporte :
   - la tige du piston qui est tubulaire, et communiquant à l'extrémité distale avec la ventouse pneumatique,
   - un conduit interne, coaxial à la tige du vérin, solidaire du corps du cylindre, pénétrant la tige tubulaire depuis ladite extrémité proximale, en liaison étanche au fluide avec une surface interne de la tige via un système de joint coulissant, formant une chambre de mise sous vide,
et dans lequel le piston est annulaire, configuré pour entourer la tige de vérin et le conduit interne, et pour balayer au moins une chambre de mise en pression du corps de cylindre connectée à au moins un port d'air comprimé externe au corps de cylindre, annulaire, délimitée entre le conduit interne et une surface interne du corps de cylindre configuré pour coulisser avec le piston.

Les caractéristiques exposées dans les paragraphes suivants peuvent, optionnellement, être mises en oeuvre, indépendamment les unes des autres ou en combinaison les unes avec les autres.

Selon un mode de réalisation, la ventouse pneumatique comporte une direction longitudinale perpendiculaire à l'axe de la tige, et un système anti-rotation configuré pour interdire la rotation de la tige et de la ventouse pneumatique par rapport au corps du cylindre, autour de l'axe de la tige.

Selon un mode de réalisation, le système anti-rotation comporte le corps de cylindre, de section non circulaire, et le piston, de forme complémentaire, non circulaire.

Selon un mode de réalisation, le corps de cylindre comporte :
- une partie principale comportant une paroi d'extrémité portant ladite ouverture traversée de manière étanche par la tige du piston, ladite paroi d'extrémité étant prolongée par une paroi périphérique, ladite paroi périphérique formant intérieurement la surface interne de corps de cylindre configurée pour coopérer au coulissement avec le piston, jusqu'à une deuxième ouverture, configurée pour autoriser une sortie du piston, et
- une partie de couvercle, configurée pour fermer de manière étanche ladite deuxième ouverture, ladite partie de couvercle étant solidaire du conduit interne au niveau d'une extrémité proximale du conduit interne opposée à une extrémité distale du conduit interne coopérant avec le système de joint coulissant.

Selon un mode de réalisation, ledit vérin pneumatique est double effet, ladite au moins une chambre de mise en pression, comportant :
- une première chambre de mise en pression définie dans le corps de cylindre, d'un premier côté du piston, la première chambre étant connectée à un premier port d'air comprimé externe, et
- une deuxième chambre de mise en pression définie dans le corps de cylindre, d'un deuxième côté du piston la deuxième chambre étant connectée à un deuxième port d'air comprimé, externe.

Selon un mode de réalisation, le corps de cylindre comporte :
- un canal de mise sous vide, dans l'épaisseur de paroi du corps de cylindre, configuré pour mettre en communication la chambre de mise sous vide interne au conduit interne et un port de vide externe au corps de cylindre,
- au moins un canal de mise en pression, dans l'épaisseur de paroi du corps de cylindre configuré pour mettre en communication ladite au moins une chambre de mise en pression et ledit au moins un port d'air comprimé, en particulier un premier canal d'air comprimé communiquant avec la première chambre de mise en pression et un deuxième canal d'air comprimé communiquant avec la deuxième chambre de mise en pression.

Selon un mode de réalisation, ledit port sous vide externe est solidaire de la partie principale du corps de cylindre, ledit canal de mise sous vide s'étendant en prolongement dans la partie principale et dans la partie de couvercle, via un joint entre la partie principale et la partie de couvercle pour assurer la mise en communication entre le port externe et la chambre de mise sous vide et/ou lequel ledit au moins un port d'air comprimé est solidaire de la partie principale du corps de cylindre, ledit au moins un canal de mise en pression s'étendant en prolongement dans la partie principale et dans la partie de couvercle, via un joint entre la partie principale et la partie de couvercle pour assurer la mise en communication entre ledit au moins un port d'air comprimé et l'une des desdites au moins une chambre de mise en pression.

Selon un mode de réalisation, ledit port d'air comprimé, en particulier le premier port d'air comprimé et le deuxième port d'air comprimé d'une part, et le port de vide, d'autre part, sont solidaires de la partie principale, agencés saillant latéralement, et suivant un encombrement suivant la direction de la tige contenu dans les limites de la partie principale, la partie de couvercle étant dépourvue de port d'air comprimé et de port de vide en saillie externe.

Selon un mode de réalisation, le corps de cylindre comporte un système de Venturi connecté d'une part à une source d'air comprimé et d'autre part, à l'atmosphère extérieure, configuré pour assurer la mise sous vide de la chambre de mise sous vide dans le conduit interne à partir d'une source d'air comprimé.

Selon un mode de réalisation, le système de Venturi comprend un port d'entrée de Venturi pour faire circuler de l'air comprimé dans le corps de cylindre dans un canal d'étranglement d'un premier diamètre inférieur au diamètre du port d'entrée de Venturi, jusqu'à la chambre de mise sous vide, puis vers un canal de sortie d'un deuxième diamètre supérieur au premier diamètre du canal d'étranglement communiquant avec la chambre de mise sous vide et en prolongement du canal d'étranglement, jusqu'à une sortie d'air du corps de cylindre, ledit canal d'étranglement de diamètre inférieur étant configuré pour accélérer le passage de l'air comprimé provenant du port d'entrée de Venturi créant ainsi du vide dans ladite chambre de mise sous vide, et ledit canal de sortie étant configuré pour évacuer l'air envoyé depuis le canal d'étranglement dans la chambre de mise sous vide vers la sortie d'air en dehors du corps de cylindre.

Selon un mode de réalisation, le port d'entrée de Venturi est solidaire de la partie de couvercle du corps de cylindre agencé saillant latéralement de ladite partie de couvercle, et lesdits canal d'étranglement et canal de sortie s'étendent à l'intérieur de la partie de couvercle.

Selon un mode de réalisation, le vérin ventouse du dispositif est utilisé pour la préhension et la manutention de produits alimentaires.

La présente divulgation concerne encore un ensemble préhenseur retourneur comportant deux dispositifs avec respectivement deux vérins ventouse montés sur un support, et comportant un actionneur configuré pour passer les deux vérins pneumatiques :
- d'une position de saisie pour laquelle les deux vérins pneumatiques, premier vérin pneumatique et deuxième vérin pneumatique, sont orientés parallèlement suivant une direction verticale, les ventouses pneumatiques dirigées vers le bas, la position de saisie étant configurée pour saisir un objet sur une surface ou pour déposer un objet sur une surface,
- à une position de retournement pour laquelle les deux vérins pneumatiques sont orientés coaxialement, configurés pour transférer ledit objet saisi par la ventouse pneumatique du premier vérin pneumatique à la ventouse pneumatique du deuxième vérin pneumatique lors du déploiement de la tige du premier vérin pneumatique ou du deuxième vérin pneumatique ou lors des déploiements des tiges du premier vérin pneumatique et du deuxième vérin pneumatique.

La présente divulgation concerne encore un procédé de retournement d'un objet sur une surface mettant en oeuvre l'ensemble et comprenant les étapes suivantes :
- /A1 / placer l'ensemble dans la position de saisie des deux vérins pneumatiques,
- /A2/ déployer la tige dudit premier vérin pneumatique, ou dudit deuxième vérin pneumatique, dans la deuxième position,
- /A3/ saisir l'objet sur la surface avec la ventouse pneumatique solidaire de la tige déployée,
- /A4/ rétracter la tige solidaire de la ventouse pneumatique portant l'objet dans la première position,
- /B1/ placer l'ensemble dans la position de retournement des deux vérins pneumatiques,
- /B2/ déployer les tiges des deux vérins pneumatiques dans la position pour transférer l'objet porté par la ventouse pneumatique dudit premier vérin pneumatique, ou dudit deuxième vérin pneumatique, à la ventouse pneumatique dudit deuxième vérin pneumatique, ou dudit premier vérin pneumatique respectivement,
- /B3/ rétracter les tiges des deux vérins pneumatiques dans la première position,
- /C1/ placer l'ensemble dans la position de saisie des deux vérins pneumatiques,
- /C2/ déployer la tige solidaire de la ventouse portant l'objet, dans la deuxième position et déposer l'objet sur la surface.

Selon un mode de réalisation, le corps de cylindre du vérin pneumatique, en particulier ledit au moins un canal de mise en pression, le cas échéant ledit canal de mise sous vide, et/ou des canaux formant le système de Venturi en particulier ledit canal d'étranglement et ledit canal de sortie est fabriqué par fabrication additive.

### Brève description des dessins

D'autres caractéristiques, détails et avantages apparaîtront à la lecture de la description détaillée ci-après, et à l'analyse des dessins annexés, sur lesquels :
**Fig. 1**

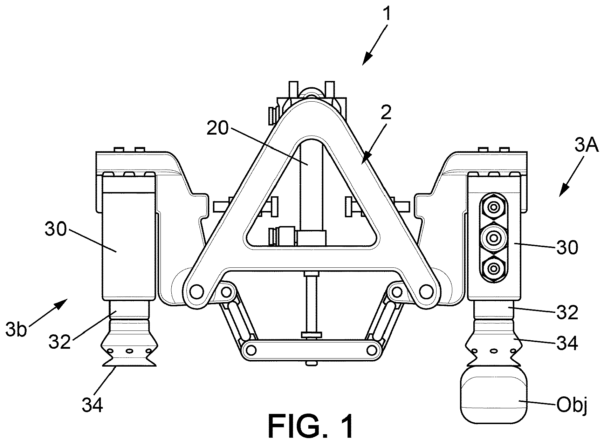

   [Fig. 1] montre une vue globale d'ensemble préhenseur retourneur, comprenant un support et deux dispositifs préhenseurs ventouse dont les vérins préhenseurs, placés dans leur position verticale, parallèles entre eux. Un des deux vérins préhenseurs porte un objet, saisi sur une première face par sa ventouse pneumatique.
**Fig. 2**

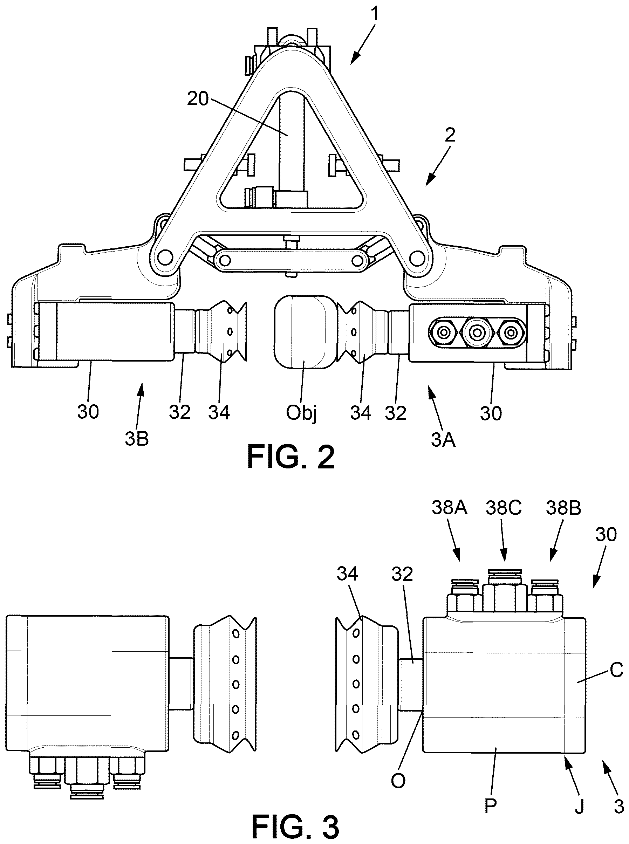

   [Fig. 2] est une vue consécutive de la Fig.1, où les deux dispositifs préhenseurs ventouse sont placés dans une seconde position de retournement pour laquelle les deux vérins pneumatiques sont orientés coaxialement, leur ventouse orientée l'une en face de l'autre, présentant l'objet saisi par la ventouse du premier vérin devant la ventouse libre du second vérin. Dans une telle configuration, le transfert de l'objet de la première ventouse pneumatique à la seconde ventouse pneumatique permet de saisir l'objet par une face opposée à la face saisie initialement.
**Fig. 3**
   [Fig. 3] montre une vue de dessus des deux dispositifs préhenseurs ventouse, désolidarisés du support, placés dans leur position de retournement en face à face. Chaque dispositif préhenseur ventouse comprend une ventouse pneumatique, solidaire d'une tige rétractable/déployable par l'ouverture du corps de cylindre du vérin pneumatique. Dans le mode de réalisation représenté, le corps de cylindre comprend une partie principale, comprenant des ports pneumatiques d'air comprimé et de vide, et une partie de couvercle.
**Fig. 4**

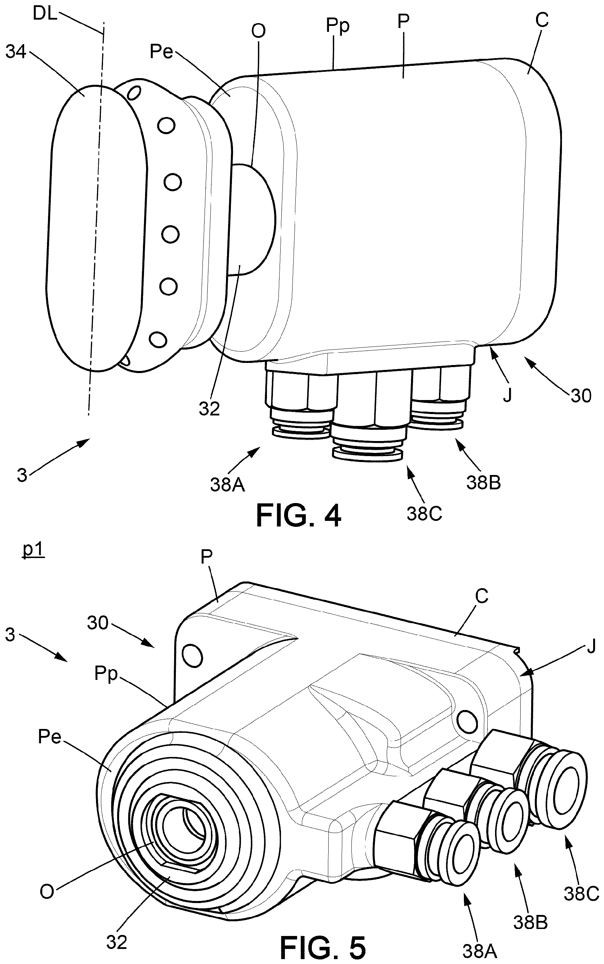

   [Fig. 4] montre une vue de trois quarts et de dessus d'un vérin préhenseur selon la Fig.3, mettant en avant la géométrie de la ventouse pneumatique.
**Fig. 5**
   [Fig. 5] montre une vue en perspective du dispositif préhenseur ventouse, montré ici sans sa ventouse pneumatique. La tige du vérin est rétractée dans la première position, dans le corps de cylindre du vérin préhenseur.
**Fig. 6**

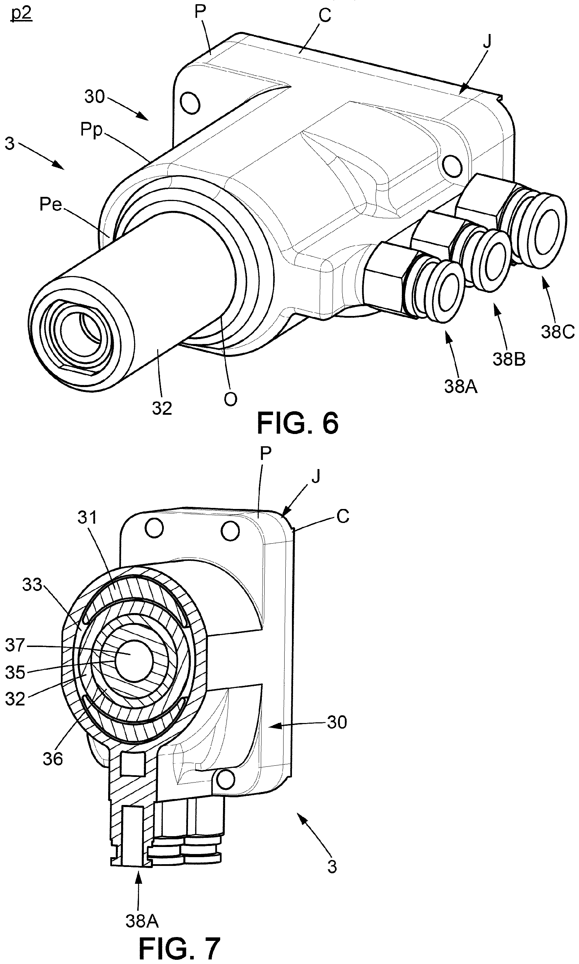

   [Fig. 6] montre la vue selon la Fig.5, où la tige est déployée dans la deuxième position, par rapport et hors du corps de cylindre du vérin préhenseur.
**Fig. 7**
   [Fig. 7] montre une coupe transversale du dispositif préhenseur ventouse, illustrant les éléments internes du corps de cylindre, le piston du vérin, la chambre interne, la tige, et la chambre de mise sous vide formée par le conduit interne. Cette vue permet d'illustrer que la tige est creuse, en communication directe avec la chambre de mise sous vide. Le piston et la chambre interne présentent une section ovale et sont de forme complémentaire. Une telle section non circulaire du piston et de la chambre interne constitue un système anti-rotation de la tige et de la ventouse pneumatique, et qui permet de conserver une orientation déterminée de la ventouse pneumatique par rapport au corps du vérin (autour de l'axe de la tige).
**Fig. 8**

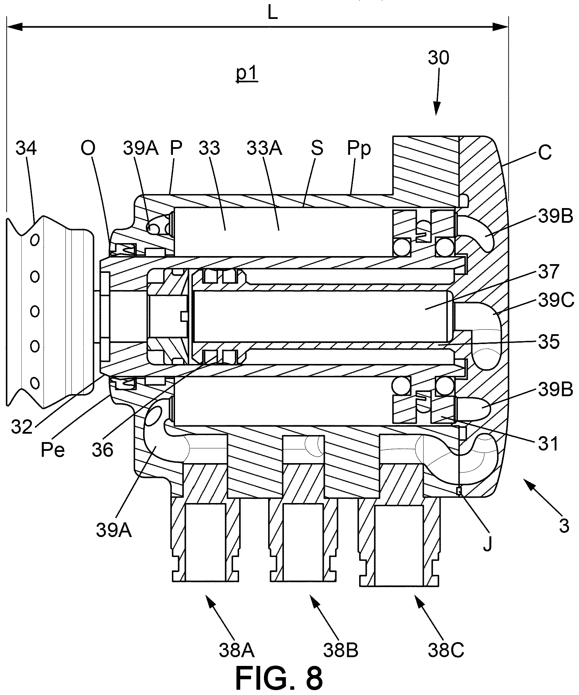

   [Fig. 8] montre une coupe longitudinale du dispositif préhenseur ventouse selon la Fig.7, représentant l'ensemble des éléments internes du corps de cylindre du vérin pneumatique. La tige tubulaire, solidaire de la ventouse pneumatique et du piston, est placée dans la première position, rétractée dans le corps de cylindre. Dans cette position, le piston est localisé à l'extrémité proximale (à droite sur la figure) de la chambre interne. Le conduit interne, formant la chambre centrale de mise sous vide, et la tige sont en contact étanche grâce à un système de joint coulissant. Dans cette représentation, le corps de cylindre comporte un système de deux canaux de mise en pression (communiquant avec les deux ports pneumatiques de gauche), reliés à la chambre interne par au moins deux ouvertures chacun. Les ouvertures des deux canaux de mise en pression débouchent dans le corps du cylindre, dans deux parois formant les bases du cylindre. Ces canaux de mise en pression sont visibles de part et d'autre du piston. Le corps de cylindre comporte également un canal de mise sous vide (communiquant avec le port pneumatique le plus à droite), relié à la chambre centrale de mise sous vide communiquant avec la tige. Ainsi, les deux canaux de mise en pression actionnent le piston et la tige, et le canal de mise sous vide actionne la succion de la ventouse située à l'extrémité distale de la tige.
**Fig. 9**

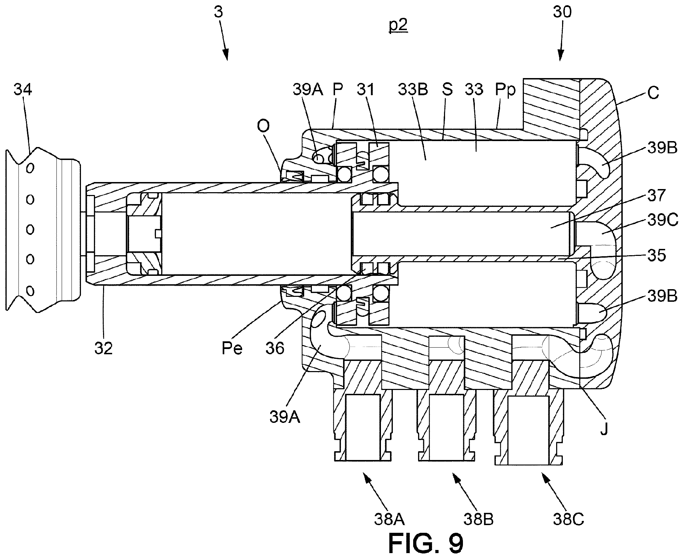

   [Fig. 9] est une seconde vue de la Fig.8, avec la tige dans sa deuxième position déployée en dehors du corps de cylindre du vérin préhenseur. Le piston est alors localisé à l'extrémité distale (gauche) de la chambre interne. Le contact étanche entre la tige et le conduit interne est assuré par les joints coulissants.
**Fig. 10**

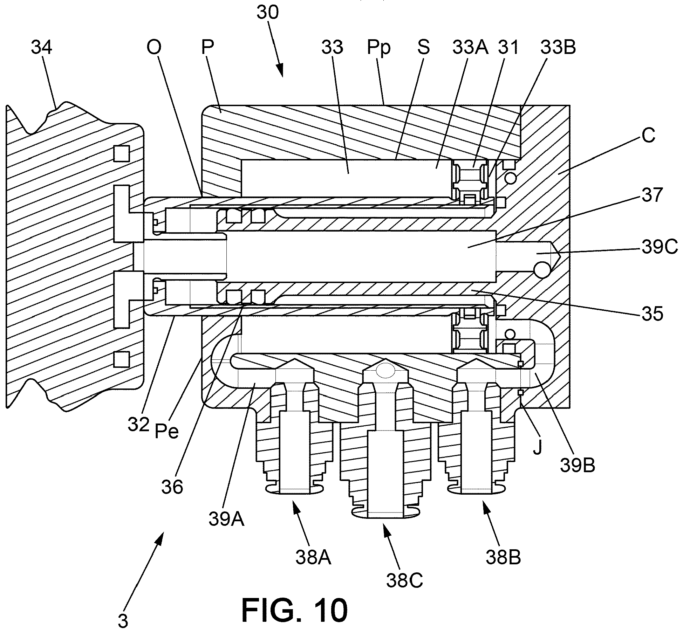

   [Fig. 10] montre un autre mode de réalisation de la Fig.8. Les ports d'air comprimé sont localisés aux extrémités (à gauche et à droite), et le port de vide est localisé au centre entre les deux ports d'air. Les canaux communiquent chacun par une unique ouverture dans la chambre interne, de part et d'autre du piston.
**Fig. 11**

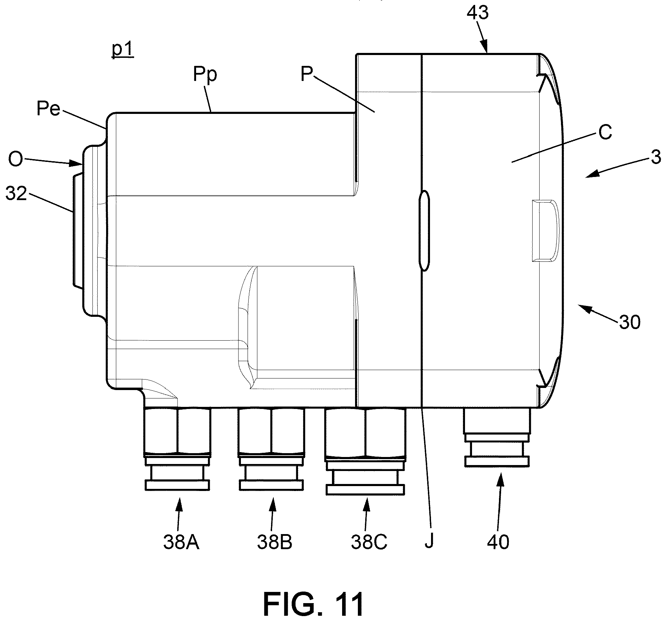

   [Fig. 11] montre un autre mode de réalisation du dispositif de préhenseur ventouse où la tige est rétractée dans la première position. Un système de Venturi est intégré dans la partie de couvercle du corps de cylindre. Le port d'entrée du Venturi fait saillie de la partie de couvercle du corps de cylindre, et une sortie d'air est située sur la partie de couvercle à l'opposé du port d'entrée du Venturi.
**Fig. 12**

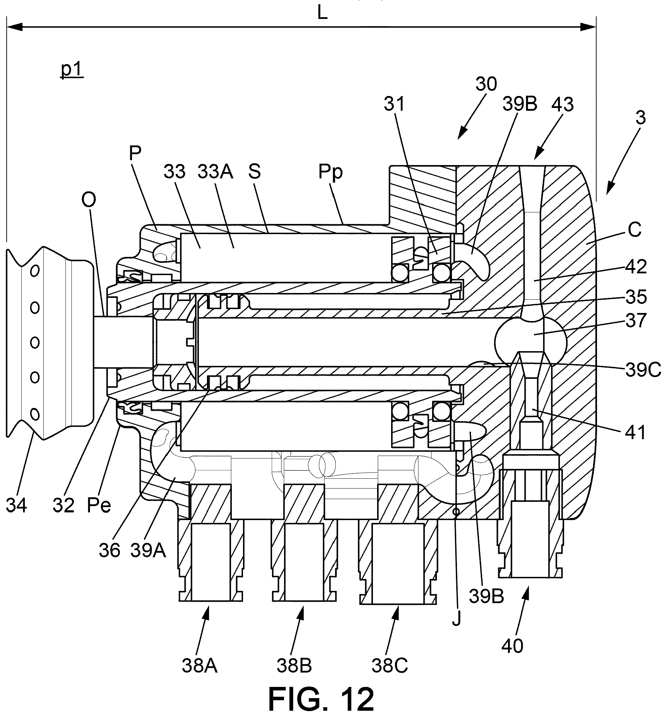

   [Fig. 12] montre une coupe longitudinale du dispositif de préhenseur ventouse selon la Fig.11 présentant l'ensemble des éléments internes du corps de cylindre avec le système de Venturi. La partie principale du corps de cylindre est la même que celle présentée à la Fig.8. La partie de couvercle intègre le système de Venturi. Le port d'entrée du Venturi est communiquant avec un canal d'étranglement, caractérisé par un diamètre réduit, inférieur au diamètre du port d'entrée. Le canal d'étranglement est rectiligne et s'étend jusqu'à la chambre de mise sous vide. En face du canal d'étranglement, dans la chambre de mise sous vide, un second canal de sortie rectiligne s'étend en prolongement du canal d'étranglement, et traverse le corps de cylindre jusqu'à une ouverture de sortie d'air. Le canal de sortie est de diamètre supérieur à celui du canal d'étranglement.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi, la présente divulgation est relative à un dispositif préhenseur ventouse 1 comportant :
- au moins un vérin pneumatique 3 comportant un corps de cylindre 30, un piston 31 monté coulissant dans une chambre interne 33 du corps de cylindre 30, et une tige 32 solidaire du piston 31,
- un système de ventouse pneumatique comportant une ventouse pneumatique 34 solidaire de l'extrémité distale de la tige 32, et un circuit de mise sous vide de la ventouse pneumatique 34 et dans lequel l'ensemble piston 31 et tige 32 est configuré pour sélectivement se rétracter dans une première position p1 dans le corps de cylindre 30, et pour se déployer dans une deuxième position p2 en sortie du corps de cylindre 30.

Un tel dispositif préhenseur ventouse 1 trouve une application particulière à l'extrémité d'un bras robotisé, en particulier un bras robotisé multi-axe. Un tel bras robotisé est configuré pour saisir un objet Obj sur une surface horizontale, telle que la surface d'un convoyeur sur laquelle repose au moins un objet Obj.

La séquence de saisie peut typiquement comprendre une descente de la ventouse pneumatique 34 par déploiement du vérin 3, et une activation du vide dans la ventouse pneumatique 34.

Un tel dispositif préhenseur 1 peut trouver une application particulière pour retourner un objet Obj. De manière générale, l'objet Obj peut être un produit alimentaire, un pack de produits thermoformés, un article, une pièce...

Par exemple, l'objet Obj peut être un produit carné, une viennoiserie ou un pack de produits sous film, se déplaçant de manière automatisée sur un tapis convoyeur, et nécessitant soit d'être retourné sur le convoyeur, par exemple pour une cuisson homogène de deux faces opposées, soit d'être replacé, par exemple s'il n'est pas correctement aligné sur le convoyeur ou enfin d'être déposé sur un autre convoyeur.

Le dispositif 1 comprend à cet effet ledit au moins un vérin pneumatique 3 qui comporte le corps de cylindre 30, la tige 32, solidaire d'un piston 31 monté coulissant dans la chambre interne 33 du corps de cylindre 30. Telle qu'illustrée aux figures 5, 6, 8, 9 ou 10, et de manière générale, la tige 32 s'étend depuis une extrémité proximale depuis la chambre interne 33 jusqu'à l'extérieur du corps de cylindre 30, au travers d'une ouverture O dans le corps de cylindre 30.

Le vérin pneumatique 3 comporte en outre le système de ventouse pneumatique avec la ventouse pneumatique 34, solidaire de l'extrémité distale de la tige 32 (à l'extérieur du corps de cylindre 30), configurée pour attraper/relâcher l'objet Obj par effet de succion. Pour activer l'effet de succion de la ventouse 34, le vérin pneumatique 3 comporte à cet effet un circuit de mise sous vide de la ventouse pneumatique 34.

L'ensemble tige 32-piston 31 est configuré pour sélectivement se rétracter dans une première position p1 dans le corps de cylindre 30, par exemple illustré aux figures 5 et 8, et pour se déployer dans une deuxième position p2 en sortie du corps de cylindre, comme illustré aux figures 6 et 9.

Ainsi, la tige est déployée lorsqu'un objet Obj doit être saisi, ou déposé, par la ventouse pneumatique 34 sur la surface, puis elle est rétractée une fois l'objet Obj saisi, ou déposé.

De plus, la tige 32 est tubulaire et communique à son extrémité distale avec la ventouse pneumatique 34.

Plus précisément, le vérin pneumatique 3 comporte également un conduit interne 35, coaxial à la tige 32, solidaire au corps de cylindre 30, pénétrant la tige 32 tubulaire depuis ladite extrémité proximale.

Ce conduit interne 35 est en liaison étanche au fluide avec la tige 32 via un système de joint coulissant 36 et forme une chambre de mise sous vide 37.

Les joints coulissants 36 sont de préférence des joints à une ou deux lèvres, de type joints SPI^{®}, configurés pour être mis d'un côté sous vide, et de l'autre côté pour être comprimés par de l'air.

Une telle conception, où la tige est tubulaire, communiquante avec la ventouse pneumatique 34 et la chambre de mise sous vide 37, est particulièrement avantageuse car elle est prévue pour que le circuit de mise sous vide soit directement intégré à la tige 32, permettant de réduire l'encombrement du dispositif préhenseur ventouse 1, et en particulier suivant l'axe de la tige du vérin.

De manière générale, l'encombrement hors-tout du dispositif préhenseur ventouse suivant l'axe de la tige 32 du vérin pneumatique, depuis une face de saisie de la ventouse pneumatique 34, et jusqu'à une base du corps de cylindre 30, opposée à la ventouse pneumatique 34, peut être réduit, par rapport à une conception selon l'état de la technique pour laquelle un système de ventouse pneumatique et un vérin pneumatique distincts, et indépendants sont juxtaposés.

Ainsi, à la figure 9, la dimension L représente la dimension hors-tout du dispositif préhenseur ventouse (dans la première position rétractée p1). La dimension L s'étend depuis la face de saisie de la ventouse pneumatique 34 jusqu'à une paroi externe de la base du corps du cylindre 30, située opposé à la ventouse pneumatique 34.

Le piston 31 est annulaire, configuré pour entourer la tige 32 et le conduit interne 35. Le piston 31 est configuré pour balayer au moins une chambre de mise en pression 33A, 33B du corps de cylindre 30. Ladite au moins une chambre de mise en pression 33A, 33B est connectée à au moins un port d'air comprimé 38A, 38B externe au corps de cylindre 30, et est aussi annulaire. Précisément, la chambre 33A, 33B est délimitée entre le conduit interne 35 et une surface interne S du corps de cylindre 30, et est configurée pour coulisser avec le piston 31.

La ventouse pneumatique 34 peut être non circulaire et comporter une direction longitudinale DL, perpendiculaire à l'axe de la tige 32, comme visible sur la Fig.4, et comprend en outre un système anti-rotation, configuré pour interdire la rotation de la tige 32 et de la ventouse pneumatique 34 par rapport au corps de cylindre 30 autour de l'axe de la tige 32. De cette façon, la ventouse 34 lorsque cette dernière présente un axe de saisie privilégié, ne pivote pas par rapport au corps du vérin 30, autour de l'axe de la tige 32, lors de la saisie ou du dépôt de l'objet Obj.

Sur la Fig.4, la ventouse pneumatique se présente avec une forme oblongue. La ventouse pneumatique 34 peut aussi être choisie avec d'autres formes, par exemple avec une forme circulaire, et avec des dimensions variables, adaptées à l'objet Obj à saisir et/ou à retourner. Par exemple, pour la préhension d'un produit alimentaire de dimensions longitudinale et transversale sensiblement égales, tel qu'un steak haché, la ventouse pneumatique 34 est de préférence circulaire, et son diamètre peut être compris entre 3 et 7 cm, tel que 5 cm. Et par exemple, pour un autre type de produit alimentaire de dimensions longitudinale et transversale différentes, tel qu'une viennoiserie, la forme de la ventouse préférée est oblongue et de dimension longitudinale qui peut être comprise entre 4 et 8 cm, telle que par exemple 6 cm et de dimension transversale inférieure, comprise entre 1 et 5 cm, telle que 3 cm.

La ventouse pneumatique 34 peut comprend un corps creux en matériau élastomère, tel que du vinyle, du silicone ou du nitrile, et comprend plusieurs soufflets, comprenant une ouverture de succion sur la face de saisie de sorte à s'adapter et être bien en contact avec les faces variables et/ou irrégulières de l'objet Obj à saisir.

Plus en détails, le système anti-rotation de la ventouse 34 peut comporter le corps de cylindre 30 qui est de section non circulaire et le piston 31 de forme complémentaire non circulaire.

Ce système est particulièrement visible sur la Fig.7, où l'on observe sur la coupe que les sections transversales du piston 31 et de la chambre interne 33 sont de formes ovales complémentaires. Ainsi, lors du balayage du piston 31 dans la chambre interne 33, l'ensemble piston-tige-ventouse ne peut pas pivoter sur lui-même autour de l'axe de la tige 32.

Il est aussi possible de choisir une forme de section circulaire, mais dans un tel mode de réalisation, un autre système anti-rotation doit être prévu, par exemple l'ouverture O du corps de cylindre 30 et la tige 32 devraient alternativement présenter par exemple une section non circulaire, ou bien des encoches ou n'importe quel système adéquat interdisant la rotation de ces éléments tout en conservant l'étanchéité du dispositif.

Comme illustré aux figures 4, 8, 9 et 10, le corps de cylindre 30 peut comporter :
- une partie principale P, avec une paroi d'extrémité Pe formant une première base du cylindre, portant l'ouverture O, traversée de manière étanche par la tige 32 du piston 31. La paroi d'extrémité Pe est prolongée par une paroi périphérique Pp qui forme intérieurement la surface interne S, configurée pour coopérer au coulissement avec le piston 31 jusqu'à une deuxième ouverture, à l'opposé de la paroi d'extrémité Pe, et configurée pour autoriser la sortie du piston 31 (ou son insertion lors du montage), et
- une partie de couvercle C, configurée pour fermer de manière étanche la deuxième ouverture et formant la deuxième base du cylindre. La partie de couvercle C est solidaire du conduit interne 35 au niveau d'une extrémité proximale du conduit interne 35 opposée à une extrémité distale du conduit interne 35 coopérant avec le système de joint coulissant 36.

La partie principale P et la partie de couvercle C peuvent être assemblées de manière étanche typiquement par vissage, dans des trous pour des organes de fixation, en regard, répartis entre la partie de couvercle C et la partie principale P, en particulier au travers d'un épaulement de la partie principale P.

Une fois désassemblées, ces deux parties, partie principale P et partie de couvercle C, sont conçues pour permettre d'accéder aux éléments internes au corps du cylindre 30, et pour faciliter le montage et le démontage du vérin 3. Le piston 31, la tige 32, les joints coulissants 36 sont ainsi facilement intégrés ou remplacés dans le corps de cylindre 30 lorsque les deux parties sont séparées.

Selon un mode de réalisation, le vérin pneumatique 3 est à double effet, c'est-à-dire que la chambre interne 33 comporte :
- une première chambre de mise en pression 33A définie dans le corps de cylindre 30 d'un premier côté du piston (par exemple représentée à gauche sur les figures 8 à 10, à l'extrémité distale de la chambre interne), étant connectée à un premier port d'air comprimé 38A externe, et
- une deuxième chambre de mise en pression 33B définie dans le corps de cylindre 30 d'un deuxième côté du piston (par exemple représentée à droite sur les figures 8 à 10, à l'extrémité proximale de la chambre interne), étant connectée à un deuxième port d'air comprimé 38B externe.

La première chambre de pression 33A, lorsque mise en pression par le premier port d'air comprimé 38A permet de contraindre le piston 31 dans le sens de rétractation du vérin pneumatique 3.

La deuxième chambre de pression 33B, lorsque mise en pression par le deuxième port d'air comprimé 38B, permet de contraindre le piston 31, dans le sens opposé.

Dans un autre mode de réalisation non représenté, le vérin pneumatique 3 est à simple effet, à savoir que le vérin est sollicité dans un sens, typiquement au déploiement (ou à la rétractation), par une chambre de mise en pression 33A, 33B, d'un seul côté du piston 31 en comprimant un ressort de rappel, typiquement un ressort de compression situé de l'autre côté du piston 31.

Le mouvement inverse du vérin pneumatique 3 (à la rétractation ou au déploiement) est obtenu par le travail du ressort, une fois que la source d'air comprimé est non activée.

Ainsi, et dans un mode de réalisation du vérin simple effet, le ressort peut être situé à l'extrémité proximale de la chambre interne (proche de la partie de couvercle C), et le port d'air comprimé envoie de l'air comprimé à l'extrémité distale de la chambre interne (proche de l'ouverture O du corps de cylindre 30). Lorsque de l'air est envoyé par le port d'air comprimé, le piston 31 balaye alors la chambre interne, depuis l'extrémité distale jusqu'à l'extrémité proximale de la chambre, et vient compresser le ressort. La compression du ressort place le piston 31 dans la deuxième position p2, où la tige 32 est déployée en dehors du corps de cylindre 30. Tant que de l'air est envoyé par le port d'air comprimé, le piston 31 est maintenu dans sa position à l'extrémité proximale, contre le ressort comprimé. Une fois que l'air n'est plus envoyé, le ressort se détend et repousse le piston 31 vers sa position d'origine, à l'extrémité distale de la chambre interne. La détente du ressort rétracte la tige 32 et le piston 31 dans la première position p1, à l'intérieur du corps de cylindre 30.

Dans un second mode de réalisation de vérin à simple effet, les positions du ressort et de l'entrée d'air comprimé dans la chambre interne sont inversées, le ressort se situe à l'extrémité distale de la chambre, et l'entrée d'air à l'extrémité proximale. La détente du ressort actionne alors le déploiement de la tige 32 et du piston 31 dans la position p2 à l'extérieur du corps de cylindre 30, et la compression du ressort actionne la rétractation de la tige 32 dans la position p1 dans le corps de cylindre 30.

Dans un mode de réalisation de l'invention, le corps de cylindre 30 comporte de plus :
- un canal de mise sous vide 39C dans l'épaisseur de paroi du corps de cylindre 30, configuré pour mettre en communication la chambre de mise sous vide 37 interne au conduit interne 35, et un port de vide 38C externe au corps de cylindre 30,
- au moins un canal de mise en pression 39A, 39B dans l'épaisseur de paroi du corps de cylindre 30 configuré pour mettre en communication ladite au moins une chambre de mise en pression 33A, 33B et ledit au moins un port d'air comprimé 38A, 38B.

Le canal de mise sous vide 39C permet d'activer l'effet de succion de la ventouse pneumatique 34 à travers la tige tubulaire 32.

Ainsi, dans une telle réalisation, le vérin préhenseur 3 intègre entièrement tout le circuit de passage d'air/de vide, ce qui participe de manière avantageuse à l'optimisation de la compacité du dispositif.

En détails, dans le mode de réalisation du vérin double effet, le premier canal de mise en pression 39A s'étend depuis le premier port d'air comprimé 38A et communique avec la première chambre de mise en pression 33A. Le premier canal de mise en pression 39A débouche dans la première chambre 33A de préférence sur la paroi d'extrémité formant la première base du corps du cylindre 30.

Le deuxième canal de mise en pression 39B s'étend depuis le deuxième port d'air comprimé 38B et communique avec la deuxième chambre de mise en pression 33B. Le deuxième canal de mise en pression 39B débouche de préférence sur la paroi d'extrémité formant la deuxième base du corps de cylindre 30, et en particulier sur une face interne de la partie de couvercle C.

Sur les figures 5, 6, 8 et 9, les ports d'air 38A et 38B sont situés l'un à côté de l'autre, à gauche sur les figures, côté extrémité distale de la chambre interne 33, et le port de vide 38C est situé tout à droite, côté extrémité proximale de la chambre interne 33. Dans ce mode de réalisation, le canal d'air 39A achemine l'air par deux entrées à l'extrémité distale, dans la première chambre de mise en pression 33A, opposée à deux entrées d'air du canal 39B à l'extrémité proximale, dans la deuxième chambre de mise en pression 33B.

Dans un autre mode de réalisation, illustré sur les figures 3, 4 et 10, le port de vide 38C est situé entre les deux ports d'air 38A, 38B et le canal de mise en pression 39A achemine l'air par une unique entrée dans la première chambre de mise en pression 33A, le canal d'air 39B achemine l'air par une unique entrée dans la deuxième chambre de mise en pression 33B.

Selon un mode de réalisation avantageux de la présente divulgation, le port sous vide 38C est solidaire de la partie principale P du corps de cylindre 30, et le canal de mise sous vide 39C s'étend en prolongement et intérieurement dans la partie principale P et dans la partie de couvercle C, via un joint J, situé entre la partie principale P et la partie de couvercle C.

Dans une telle réalisation, le joint J entre la partie principale P et la partie de couvercle C assure la mise en communication entre le port externe sous vide 38C et la chambre de mise sous vide 37.

Selon un mode de réalisation, ledit au moins un port d'air comprimé 38A, 38B est solidaire de la partie principale P du corps de cylindre 30, au moins un canal de mise en pression s'étendant en prolongement dans la partie principale P et dans la partie de couvercle C, via un joint J entre la partie principale P et la partie de couvercle C pour assurer la mise en communication entre ledit au moins un port d'air comprimé 38B et ladite au moins une chambre de mise en pression 33A, 33B.

Dans le cas d'un vérin double effet, le deuxième canal de mise en pression 39B s'étend depuis le deuxième port d'air comprimé 38B et communique avec la deuxième chambre de mise en pression 33B. Le deuxième canal de mise en pression 39A débouche sur la paroi d'extrémité formant la deuxième base du corps de cylindre, sur une face interne de la partie de couvercle C.

Disposer le port de mise sous vide 38C, solidaire de la partie principale P et donc non solidaire directement de la partie de couvercle C, permet de diminuer l'encombrement de la partie de couvercle C (suivant l'axe de la tige 32) qui peut ainsi être avantageusement dépourvue de port de vide 38C en saillie.

Disposer le port d'air comprimé 38B solidaire de la partie principale P tout en assurant une alimentation en air comprimé de ladite au moins une chambre de mise en pression 33A, 33B (en particulier de la deuxième chambre de mise en pression 33B) participe également à la diminution de l'encombrement de la partie de couvercle C suivant l'axe de la tige 32, qui peut ainsi être avantageusement dépourvue de port d'air comprimé 38A, 38B en saillie.

La partie de couvercle C, dépourvue de port d'air comprimé 38A, 38B et de port de vide 39C peut servir de platine de fixation pour un support, comme par exemple visible à la figure 1.

Le joint J permet d'assurer l'étanchéité au fluide de l'ensemble du corps de cylindre 30, et de bien séparer les compartiments recevant de l'air comprimé (les canaux à air comprimé 39A, 39B, et les chambres de mise en pression 33A, 33B) de ceux sous vide (le canal à vide 39C et la chambre sous vide 37).

Le joint J est de préférence un joint élastomère, polymère ou en caoutchouc, configuré pour être compressé entre la partie principale P et la partie de couvercle C, lors du montage du vérin pneumatique 3.

Selon un autre mode de réalisation représenté sur les figures 11 et 12, le corps de cylindre 30 comporte un système de Venturi connecté d'une part à une source d'air comprimé et d'autre part à l'atmosphère extérieure, configuré pour assurer la mise sous vide de la chambre de mise sous vide 37 dans le conduit interne 35 à partir d'une source d'air comprimé.

Un tel système de Venturi est particulièrement avantageux car ne nécessite qu'une source d'air comprimé, qui est déjà à disposition pour envoyer de l'air comprimé dans les ports 38A et 38B, et non pas une source de vide. Le système de Venturi fonctionne donc en remplacement du port de vide externe 38C pour actionner la ventouse pneumatique 34. Le port de vide 38C et/ou le canal de mise sous vide 39C peuvent par exemple être obturés lors de l'utilisation du Venturi.

Dans ce mode de réalisation, le système de Venturi comprend alors un port d'entrée de Venturi 40 pour faire circuler de l'air comprimé dans le corps de cylindre 30 dans un canal d'étranglement 41 d'un premier diamètre inférieur au diamètre du port d'entrée de Venturi 40, jusqu'à la chambre de mise sous vide 37, puis vers un canal de sortie 42 d'un deuxième diamètre supérieur au premier diamètre du canal d'étranglement 41 communiquant avec la chambre de mise sous vide 37 et en prolongement du canal d'étranglement 41, jusqu'à une sortie d'air 43 du corps de cylindre 30. Le canal d'étranglement 41 de diamètre inférieur est ainsi configuré pour accélérer le passage de l'air comprimé provenant du port d'entrée de Venturi 40 créant une dépression et du vide par effet Venturi, dans la chambre de mise sous vide 37. Le canal de sortie 42 est configuré pour évacuer l'air envoyé depuis le canal d'étranglement 41 dans la chambre de mise sous vide 37 vers la sortie d'air 43 en dehors du corps de cylindre 30.

Dans ce mode de réalisation, le port d'entrée de Venturi 40 peut être solidaire de la partie de couvercle C du corps de cylindre 30 agencé saillant latéralement de ladite partie de couvercle C, et lesdits canal d'étranglement 41 et canal de sortie 42 s'étendent à l'intérieur de la partie de couvercle C. La chambre de mise sous vide 37 s'étend également partiellement dans la partie de couvercle C pour se connecter aux deux canaux 41 et 42, de préférence sensiblement selon un axe perpendiculaire à la tige 32 du vérin.

La dimension L hors-tout du dispositif préhenseur ventouse 1 avec Venturi peut être typiquement plus élevée que la dimension L du mode de réalisation sans Venturi.

Le système de Venturi complet peut être donc entièrement intégré à la partie de couvercle C. Cette configuration particulière peut permettre de passer du premier mode de réalisation sans Venturi, tel que représenté aux figures 1 à 10, au second mode de réalisation avec Venturi, représenté aux figures 11 et 12, en ne remplaçant que la partie de couvercle C du corps de cylindre 30 car la partie principale P est la même pour les deux modes de réalisation.

Par ailleurs, la conception spécifique de la partie de couvercle C permet de réduire les coûts matériels, car il n'est pas nécessaire de fabriquer entièrement un deuxième dispositif pour passer d'un mode de réalisation sans Venturi au mode de réalisation avec Venturi. Le dispositif est alors prévu pour être adapté aisément en fonction des équipements choisis ou disponibles (source de vide et/ou d'air comprimé).

Selon un mode de réalisation, le vérin ventouse 3 est utilisé pour la préhension et la manutention de produits alimentaires.

En détails, le dispositif de la présente divulgation est configuré pour ne présenter aucune arête vive, pour être dépourvu de trous ou de zones de rétention. Les parties principale P et de couvercle C sont ainsi entièrement lisses, sans angles droits ni cavités, et avec des parois pentues les unes par rapport aux autres pour favoriser l'évacuation des résidus et dépôts alimentaires/liquides lors de l'utilisation du dispositif. De même, la ventouse pneumatique 34, ainsi que sa fixation à la tige 32, ne présentent aucun nid de rétention et conviennent aux applications alimentaires, avec des matériaux spécifiques pour le contact alimentaire répondant aux normes alimentaires FDA et européennes CE (normes EN 1672-2:2005+A1:2009, ISO 14159:2002). Le dispositif répond ainsi aux standards 3A et EHEDG.

Une telle configuration du dispositif est donc particulièrement avantageuse car très hygiénique. Les surfaces lisses et sans zones de rétention permettent le nettoyage complet et rapide du dispositif. Il est en effet primordial de nettoyer l'ensemble des pièces afin d'éliminer tout risque de contamination pathogène des aliments après plusieurs heures de production alimentaire.

La présente divulgation est aussi relative à un ensemble préhenseur retourneur comprenant deux dispositifs préhenseurs ventouse 1, tel que représenté sur les figures 1 et 2.

Un tel ensemble comprend alors respectivement deux vérins pneumatiques 3 appartenant aux deux dispositifs préhenseurs ventouse, montés sur un support 2. Le support 2 comporte un actionneur 20 configuré pour passer les deux vérins pneumatiques 3 :
- d'une position de saisie illustrée à la figure1, pour laquelle les deux vérins pneumatiques 3, premier vérin pneumatique 3A et deuxième vérin pneumatique 3B (dans un ordre quelconque), sont orientés parallèlement suivant une direction verticale, les ventouses pneumatiques 34 orientées vers le bas, la position de saisie étant configurée pour saisir l'objet Obj sur la surface ou pour déposer l'objet Obj sur la surface,
- à une position de retournement, illustrée à la figure 2, pour laquelle les deux vérins pneumatiques 3 sont orientés coaxialement, configurés pour transférer ledit objet Obj saisi par la ventouse pneumatique 34 du premier vérin pneumatique 3A à la ventouse pneumatique 34 du deuxième vérin pneumatique 3B, ou lors des déploiements des tiges 32 du premier vérin pneumatique 3A et du deuxième vérin pneumatique 3B.

Notamment, un tel ensemble peut être monté sur un bras robotique automatisé, et équipé de dispositifs de reconnaissance de formes, de dimensions, etc, tels que des caméras.

L'ensemble préhenseur retourneur selon la présente divulgation, comportant deux dispositifs préhenseurs ventouse 1, est utilisé selon le procédé de retournement de l'objet Obj sur la surface qui comprend les étapes suivantes :
- /A1 / placer l'ensemble dans la position de saisie des deux vérins pneumatiques 3,
- /A2/ déployer la tige 32 dudit premier vérin pneumatique 3A, (ou respectivement dudit deuxième vérin pneumatique 3B), dans la deuxième position p2,
- /A3/ saisir l'objet Obj sur la surface avec la ventouse pneumatique 34 solidaire de la tige 32 déployée,
- /A4/ rétracter la tige 32 solidaire de la ventouse pneumatique 34 portant l'objet Obj dans la première position p1,
- /B1/ placer l'ensemble dans la position de retournement des deux vérins pneumatiques 3,
- /B2/ déployer les tiges 32 des deux vérins pneumatiques 3 dans la position p2 pour transférer l'objet Obj porté par la ventouse pneumatique 34 dudit premier vérin pneumatique 3A, (ou respectivement dudit deuxième vérin pneumatique 3B), à la ventouse pneumatique 34 dudit deuxième vérin pneumatique 3B, (ou respectivement dudit premier vérin pneumatique 3A ),
- /B3/ rétracter les tiges 32 des deux vérins pneumatiques 3 dans la première position p1,
- /C1/ placer l'ensemble dans la position de saisie des deux vérins pneumatiques 3,
- /C2/ déployer la tige 32 solidaire de la ventouse 34 portant l'objet Obj, dans la deuxième position p2 et déposer l'objet Obj sur la surface.

Les étapes /A1/ à /A4/ consistent ainsi à saisir et remonter l'objet Obj par le premier vérin 3A depuis la surface, comme illustré à la figure 1.

Les étapes /B1/ à /B3/, par exemple représentées à la figure 2, permettent ensuite de transférer l'objet Obj du premier vérin 3A au deuxième vérin 3B, de sorte qu'à l'étape /B2/, l'objet Obj est saisi par le deuxième vérin 3B par sa face opposée à la face initiale de saisie par le premier vérin 3A à l'étape /A3/.

Durant les étapes /C1/ et /C2/, l'objet Obj ainsi retourné est reposé par le deuxième vérin 3B sur la surface.

La présente divulgation est en outre relative à un procédé de fabrication du dispositif préhenseur ventouse 1 présenté ci-avant. Le corps de cylindre 30 du vérin pneumatique 3, en particulier ledit au moins un canal de mise en pression 39A, 39B, le cas échéant, ledit canal de mise sous vide 39C, et/ou les canaux formant le système de Venturi en particulier ledit canal d'étranglement (41) et ledit canal de sortie 42, est fabriqué par des méthodes de fabrication additive.

Une fabrication additive est privilégiée, car elle permet de concevoir le dispositif 1 de vérin pneumatique 3 précité, y compris les différents canaux internes (de mise en pression 38A, 38B, de vide 38C, d'étranglement 41 ou de sortie d'air 42).

Une telle technique de fabrication additive en impression 3D assure au dispositif sa conception ingénieuse très compacte. Elle est de plus très avantageuse car elle est rapide, simple à mettre en oeuvre et les pièces peuvent être fabriquées sur demande sans nécessiter d'infrastructure spécifique, au contraire par exemple d'une fabrication par moulage qui requiert un moule dédié à chaque pièce.

Le nombre de pièces à fabriquer nécessaires au dispositif est ainsi réduit, et les matériaux utilisables sont classiques et peu coûteux. Notamment, pour fabriquer le vérin pneumatique 3 il est possible d'employer des matériaux plastiques tels que du PLA ou du plastique ABS, ou bien des métaux, tels que du titane ou de l'acier inoxydable.

Dans le cadre d'une application en milieu agroalimentaire, le matériau peut être avantageusement du plastique polyamide PA *metal detectable,* injecté par impression par frittage sélectif par laser (SLS).

Enfin, bien que le dispositif 1 de la présente divulgation soit conçu dans le but de réduire son encombrement, il est tout à fait possible de concevoir le vérin pneumatique 3, ainsi que tous ses éléments, notamment sa tige 32, dans des dimensions plus grandes, permettant de lever et porter des objets Obj plus grands/plus lourds, ou nécessitant une tige télescopique plus longue. Il est également possible de concevoir un dispositif avec plusieurs tiges télescopiques.

### Liste des signes de référence

- 1. Dispositif préhenseur ventouse,
- 2. Support,
- 20. Actionneur,
- 3. Vérin pneumatique,
- 3A. Premier vérin pneumatique,
- 3B. Deuxième vérin pneumatique,
- 30. Corps de cylindre,
- 31. Piston,
- 32. Tige tubulaire,
- 33. Chambre interne,
- 33A. Première chambre de mise en pression,
- 33B. Deuxième chambre de mise en pression,
- 34. Ventouse pneumatique,
- 35. Conduit interne,
- 36. Joint coulissant,
- 37. Chambre de mise sous vide,
- 38A., 38B. Ports d'air comprimé,
- 38C. Port de vide,
- 39A., 39B. Canaux de mise en pression,
- 39C. Canal de mise sous vide,
- 40. Port d'entrée de Venturi,
- 41. Canal d'étranglement,
- 42. Canal de sortie,
- 43. Sortie d'air,
- S. Surface interne,
- O. Ouverture de corps de cylindre,
- P. Partie principale,
- Pe. Paroi d'extrémité,
- Pp. Paroi périphérique,
- C. partie de couvercle,
- J. Joint,
- DL. Direction longitudinale,
- L. Dimension,
- Obj. Objet,
- p1. Première position,
- p2. Deuxième position.

## Revendications

1. Dispositif préhenseur ventouse (1) comportant :
- au moins un vérin pneumatique (3) comportant un corps de cylindre (30), un piston (31) monté coulissant dans une chambre interne (33) du corps de cylindre (30), et une tige (32) solidaire du piston (31) s'étendant depuis une extrémité proximale depuis la chambre interne (33) jusqu'à l'extérieur du corps de cylindre (30), au travers d'une ouverture (O) dans le corps de cylindre (30),
- un système de ventouse pneumatique comportant une ventouse pneumatique (34) solidaire de l'extrémité distale de la tige (32), et un circuit de mise sous vide de la ventouse pneumatique (34) et dans lequel l'ensemble piston (31) et tige (32) est configuré pour sélectivement se rétracter dans une première position (p1) dans le corps de cylindre (30), et pour se déployer dans une deuxième position (p2) en sortie du corps de cylindre (30)
et dans lequel le circuit de mise sous vide de la ventouse pneumatique (34) comporte :
- la tige (32) du piston (31) qui est tubulaire, et communiquant à l'extrémité distale avec la ventouse pneumatique (34) ,
- un conduit interne (35), coaxial à la tige (32) du vérin (3), solidaire du corps du cylindre (30), pénétrant la tige (32) tubulaire depuis ladite extrémité proximale, en liaison étanche au fluide avec une surface interne de la tige via un système de joint coulissant (36), formant une chambre de mise sous vide (37),
et dans lequel le piston (31) est annulaire, configuré pour entourer la tige (32) de vérin (3) et le conduit interne (35), et pour balayer au moins une chambre de mise en pression (33A, 33B) du corps de cylindre (30) connectée à au moins un port d'air comprimé (38A, 38B) externe au corps de cylindre (30), annulaire, délimitée entre le conduit interne (35) et une surface interne (S) du corps de cylindre (30) configuré pour coulisser avec le piston (31).

2. Dispositif (1) selon la revendication 1, dans lequel la ventouse pneumatique (34) comporte une direction longitudinale (DL) perpendiculaire à l'axe de la tige (32), et un système anti-rotation configuré pour interdire la rotation de la tige (32) et de la ventouse pneumatique (34) par rapport au corps du cylindre (30), autour de l'axe de la tige (32).

3. Dispositif (1) selon la revendication 2, dans lequel le système anti-rotation comporte le corps de cylindre (30), de section non circulaire, et le piston (31), de forme complémentaire, non circulaire.

4. Dispositif (1) selon l'une des revendications 1 à 3, dans lequel le corps de cylindre (30) comporte :
- une partie principale (P) comportant une paroi d'extrémité (Pe) portant ladite ouverture (O) traversée de manière étanche par la tige (32) du piston (31), ladite paroi d'extrémité (Pe) étant prolongée par une paroi périphérique (Pp), ladite paroi périphérique (Pp) formant intérieurement la surface interne (S) de corps de cylindre (30) configurée pour coopérer au coulissement avec le piston (31), jusqu'à une deuxième ouverture, configurée pour autoriser une sortie du piston (31), et
- une partie de couvercle (C), configurée pour fermer de manière étanche ladite deuxième ouverture, ladite partie de couvercle (C) étant solidaire du conduit interne (35) au niveau d'une extrémité proximale du conduit interne (35) opposée à une extrémité distale du conduit interne (35) coopérant avec le système de joint coulissant (36).

5. Dispositif (1) selon l'une des revendications 1 à 4, dans lequel ledit vérin pneumatique (3) est double effet, ladite au moins une chambre de mise en pression (33A, 33B), comportant :
- une première chambre de mise en pression (33A) définie dans le corps de cylindre (30), d'un premier côté du piston (31), la première chambre (33A) étant connectée à un premier port d'air comprimé (38A) externe, et
- une deuxième chambre de mise en pression (33B) définie dans le corps de cylindre (30), d'un deuxième côté du piston (31) la deuxième chambre (33B) étant connectée à un deuxième port d'air comprimé (38B), externe.

6. Dispositif (1) selon l'une des revendications 1 à 5, dans lequel le corps de cylindre (30) comporte :
- un canal de mise sous vide (39C), dans l'épaisseur de paroi du corps de cylindre (30), configuré pour mettre en communication la chambre de mise sous vide (37) interne au conduit interne (35) et un port de vide (38C) externe au corps de cylindre (30),
- au moins un canal de mise en pression (39A, 39B), dans l'épaisseur de paroi du corps de cylindre (30) configuré pour mettre en communication ladite au moins une chambre de mise en pression (33A, 33B) et ledit au moins un port d'air comprimé (38A, 38B), en particulier un premier canal d'air comprimé (39A) communiquant avec la première chambre de mise en pression (33A) et un deuxième canal d'air comprimé (39B) communiquant avec la deuxième chambre de mise en pression (33B).

7. Dispositif (1) selon les revendications 4 et 6, dans lequel ledit port sous vide externe (38C) est solidaire de la partie principale (P) du corps de cylindre (30), ledit canal de mise sous vide (39C) s'étendant en prolongement dans la partie principale (P) et dans la partie de couvercle (C), via un joint (J) entre la partie principale (P) et la partie de couvercle (C) pour assurer la mise en communication entre le port externe (38C) et la chambre de mise sous vide (37) et/ou lequel ledit au moins un port d'air comprimé (38A, 38B) est solidaire de la partie principale (P) du corps de cylindre (30), ledit au moins un canal de mise en pression (39A, 39B) s'étendant en prolongement dans la partie principale (P) et dans la partie de couvercle (C), via un joint (J) entre la partie principale (P) et la partie de couvercle (C) pour assurer la mise en communication entre ledit au moins un port d'air comprimé (38A, 38B) et l'une des desdites au moins une chambre de mise en pression (33A, 33B).

8. Dispositif (1) selon la revendication 7, dans lequel ledit port d'air comprimé (38A, 38B), en particulier le premier port d'air comprimé (38A) et le deuxième port d'air comprimé (38B) d'une part, et le port de vide (38C), d'autre part, sont solidaires de la partie principale (P), agencés saillant latéralement, et suivant un encombrement suivant la direction de la tige (32) contenu dans les limites de la partie principale (P), la partie de couvercle (C) étant dépourvue de port d'air comprimé (38A, 38B) et de port de vide (38C) en saillie externe.

9. Dispositif (1) selon l'une des revendications 1 à 7, dans lequel le corps de cylindre (30) comporte un système de Venturi connecté d'une part à une source d'air comprimé et d'autre part, à l'atmosphère extérieure, configuré pour assurer la mise sous vide de la chambre de mise sous vide (37) dans le conduit interne (35) à partir d'une source d'air comprimé.

10. Dispositif (1) selon la revendication 9, dans lequel le système de Venturi comprend un port d'entrée de Venturi (40) pour faire circuler de l'air comprimé dans le corps de cylindre (30) dans un canal d'étranglement (41) d'un premier diamètre inférieur au diamètre du port d'entrée de Venturi (40), jusqu'à la chambre de mise sous vide (37), puis vers un canal de sortie (42) d'un deuxième diamètre supérieur au premier diamètre du canal d'étranglement (41) communiquant avec la chambre de mise sous vide (37) et en prolongement du canal d'étranglement (41), jusqu'à une sortie d'air (43) du corps de cylindre (30), ledit canal d'étranglement (41) de diamètre inférieur étant configuré pour accélérer le passage de l'air comprimé provenant du port d'entrée de Venturi (40) créant ainsi du vide dans ladite chambre de mise sous vide (37), et ledit canal de sortie (42) étant configuré pour évacuer l'air envoyé depuis le canal d'étranglement (41) dans la chambre de mise sous vide (37) vers la sortie d'air (43) en dehors du corps de cylindre (30).

11. Dispositif (1) selon la revendication 4 prise en combinaison avec la revendication 10, dans lequel le port d'entrée de Venturi (40) est solidaire de la partie de couvercle (C) du corps de cylindre (30) agencé saillant latéralement de ladite partie de couvercle (C), et lesdits canal d'étranglement (41) et canal de sortie (42) s'étendent à l'intérieur de la partie de couvercle (C).

12. Procédé d'utilisation du dispositif (1) selon l'une des revendications 1 à 11, dans lequel le vérin ventouse (3) est utilisé pour la préhension et la manutention de produits alimentaires.

13. Ensemble préhenseur retourneur comportant deux dispositifs (1) selon l'une des revendications 1 à 11, avec respectivement deux vérins ventouse (3) montés sur un support (2), et comportant un actionneur (20) configuré pour passer les deux vérins pneumatiques (3) :
- d'une position de saisie pour laquelle les deux vérins pneumatiques (3), premier vérin pneumatique (3A) et deuxième vérin pneumatique (3B), sont orientés parallèlement suivant une direction verticale, les ventouses pneumatiques (34) dirigées vers le bas, la position de saisie étant configurée pour saisir un objet (Obj) sur une surface ou pour déposer un objet (Obj) sur une surface,
- à une position de retournement pour laquelle les deux vérins pneumatiques (3) sont orientés coaxialement, configurés pour transférer ledit objet (Obj) saisi par la ventouse pneumatique (34) du premier vérin pneumatique (3A) à la ventouse pneumatique (34) du deuxième vérin pneumatique (3B) lors du déploiement de la tige (32) du premier vérin pneumatique (3A) ou du deuxième vérin pneumatique (3B) ou lors des déploiements des tiges (32) du premier vérin pneumatique (3A) et du deuxième vérin pneumatique (3B).

14. Procédé de retournement d'un objet (Obj) sur une surface mettant en oeuvre l'ensemble de la revendication 13 et comprenant les étapes suivantes :
- /A1 / placer l'ensemble dans la position de saisie des deux vérins pneumatiques (3),
- /A2/ déployer la tige (32) dudit premier vérin pneumatique (3A), ou dudit deuxième vérin pneumatique (3B), dans la deuxième position (p2),
- /A3/ saisir l'objet (Obj) sur la surface avec la ventouse pneumatique (34) solidaire de la tige (32) déployée,
- /A4/ rétracter la tige (32) solidaire de la ventouse pneumatique (34) portant l'objet (Obj) dans la première position (p1),
- /B1 / placer l'ensemble dans la position de retournement des deux vérins pneumatiques (3),
- /B2/ déployer les tiges (32) des deux vérins pneumatiques (3) dans la position (p2) pour transférer l'objet (Obj) porté par la ventouse pneumatique (34) dudit premier vérin pneumatique (3A), ou dudit deuxième vérin pneumatique (3B), à la ventouse pneumatique (34) dudit deuxième vérin pneumatique (3B), ou dudit premier vérin pneumatique (3A) respectivement,
- /B3/ rétracter les tiges (32) des deux vérins pneumatiques (3) dans la première position (p1),
- /C1/ placer l'ensemble dans la position de saisie des deux vérins pneumatiques (3),
- /C2/ déployer la tige (32) solidaire de la ventouse (34) portant l'objet (Obj), dans la deuxième position (p2) et déposer l'objet (Obj) sur la surface.

15. Procédé de fabrication d'un dispositif préhenseur ventouse (1) selon l'une des revendications 1 à 11, dans lequel le corps de cylindre (30) du vérin pneumatique (3), en particulier ledit au moins un canal de mise en pression (39A, 39B), le cas échéant ledit canal de mise sous vide (39C), et/ou les canaux formant le système de Venturi en particulier ledit canal d'étranglement (41) et ledit canal de sortie (42) lorsque le dispositif est dépendant de la revendication 10 ou 11, est fabriqué par fabrication additive.
